# EUROPÄISCHE PATENTSCHRIFT

(11) **EP 0 922 881 B1**
(45) Veröffentlichungstag und Bekanntmachung des Hinweises auf die Patenterteilung: **26.11.2003**
(21) Anmeldenummer: 98114914.9
(22) Anmeldetag: 08.08.1998
(51) Int. Cl.: F16F 15/16

(54) **Elastische Kupplung, insbesondere Zweimassenschwungrad für eine Brennkraftmaschine**
Elastic coupling, in particular two-mass flywheel for combustion engine
Couplage élastique, en particulier volant à deux masses pour moteur à combustion

(30) Priorität: 14.11.1997 DE 19750407
(43) Veröffentlichungstag der Anmeldung: 16.06.1999
(73) Patentinhaber: Voith Turbo GmbH & Co. KG, 89522 Heidenheim (DE)
(72) Erfinder: Hanke, Wolfgang, 89518 Heidenheim (DE)
(74) Vertreter: Dr. Weitzel & Partner

(56) Entgegenhaltungen:
- DE-A- 4 017 514
- US-A- 5 569 087
- US-A- 5 573 460
- US-A- 5 653 639

## Beschreibung

Die Erfindung betrifft eine elastische Kupplung, insbesondere für ein Zweimassenschwungrad für eine Brennkraftmaschine gemäß dem Oberbegriff des Anspruches 1.

Eine Kupplung dieser Gattung ist aus der DE-PS 28 48 748 bekannt.

US 55 73 460 zeigt und beschreibt eine elastische Kupplung in Scheibenbauweise, umfassend zwei Kupplungshälften, die begrenzt gegeneinander verdrehbar und über elastische Kupplungselemente miteinander verbunden sind. Im radial äußeren Bereich eines Innenraumes befinden sich Verdrängungskammem, die mit einem Dämpfungsmedium füllbar sind. Eine weitere, ähnliche Kupplung ist aus DE 28 48 748 bekanntgeworden.

Kupplungen der genannten Art haben die Aufgabe, die Laufruhe von Antrieben mit Brennkraftmaschinen, insbesondere in Fahrzeugen, in allen Betriebs- und Drehzahlbereichen sicherzustellen. Insbesondere sollten störende Torsionsschwingungen vom Antriebsstrang femgehalten werden.

Die Elastizität der Kupplung ist so gewählt, daß die kritische Drehzahl des aus Motor und Getriebe bestehenden Massensystems genügend weit unterhalb des Betriebsbereichs liegt. Dabei sollen beim Durchfahren der kritischen Drehzahl keine zu großen Amplituden und Torsionsmomente in den Antriebselementen entstehen. Wesentlichen Beitrag dazu leistet eine auf den Antriebsstrang abgestimmte Dämpfungseinrichtung in der Kupplung selbst, nämlich eine hydraulische Dämpfung durch Verdrängung von Dämpfungsmedium durch definierte Spalte. Das Problem dabei ist, daß je nach Motortyp (Otto-Motor, Diesel-Motor) oder Zylinderzahl bzw. Zylinder-Anordnung (Reihenmotor, V-Motor) ein unterschiedliches Drehschwingungsverhalten vorliegt. Während sich die Federbestückung der Kupplung in erster Linie nach der Höhe des zu übertragenden Drehmomentes richtet, läßt sich die parallelgeschaltete Dämpfungseinrichtung in kritischen Anwendungsfällen nicht variabel genug einstellen. Es hat sich unter anderem gezeigt, daß bei großen relativen Verdrehwinkeln viel Dämpfungsmedium unkontrolliert über Axialspalte ins Innere der Kupplung entweicht, ohne wesentlich zur Dämpfung beizutragen.

Zur Gattung der Erfindung gehört ferner eine aus dem DE-GM 88 08 004 bekannte Kupplung in Scheibenbauweise, bei der die eine Kupplungshälfte die andere unter Bildung eines flüssigkeitsdichten und mit Dämpfungsmedium füllbaren Innenraumes einschließt. Es sind Verdrängungskammern mit Drosselspalten angeordnet, und die innenliegenden Scheiben sind am äußeren Umfang durch Trennwände abgeteilt, zwischen welche radiale Flächen an den Scheiben nach einem bestimmten Verdrehwinkel eintauchen. Dadurch wird eine den Belastungszuständen der Kupplung besser anpaßbare Dämpfung von Drehschwingungen erzielt, insbesondere eine bessere Anpassung an die Leerlauf- und Vollast-Bedingungen des Motors.

Bei manchen Betriebszuständen von Antriebssträngen kommt es zum Verschleiß oder zu Beschädigungen von einzelnen Bauteilen. So ist es bekannt, daß Beschädigungen der Federn des Federpaketes dadurch auftreten, daß die Federn "auf Block gehen", d.h., daß die Federwindungen unter hohen Drücken zum gegenseitigen Anliegen kommen, was zu Verformungen führt. Auch ein hartes gegenseitiges Anschlagen jener Nockenflächen, die die Dämpfungskammem in Umfangsrichtung begrenzen, kann zu Schäden führen. Dieser Gefahr könnte man zwar dadurch entgegenwirken, daß man die Federn des Federpaketes steifer macht. Dies ist jedoch deshalb unerwünscht, weil man generell eine weiche Federcharakteristik anstrebt, um die Resonanzfrequenz der Kupplung möglichst weit abzusenken.

Der Erfindung liegt die Aufgabe zugrunde, eine Kupplung gemäß dem Oberbegriff von Anspruch 1 derart zu gestalten, daß das Anschlagmoment erhöht wird, ohne daß die Federcharakteristik für bestimmte Betriebsbereiche verändert werden muß.

Diese Aufgabe wird durch die Merkmale des Patentanspruchs 1 gelöst.

Damit wird das genannte Problem mit verhältnismäßig geringem baulichen Aufwand auf wirkungsvolle Weise beseitigt. Es kommt nicht mehr zu einem harten Aufschlagen der beteiligten Begrenzungsflächen im Endbereich eines Verdrehspiels. Die Federcharakteristik des Gesamtsystems kann dadurch auf dem Hauptteil des Verdrehwinkels relativ weich gestaltet werden, in der letzten Phase aber relativ hart.

Als weitere Maßnahme kann der betreffende Nocken derart gestaltet werden, daß er nicht nur einen zusätzlichen Kraftspeicher darstellt, sondern auch ein zusätzliches Dämpfungselement.

Die Erfindung ist anhand der Zeichnung näher erläutert. Darin ist im einzelnen folgendes dargestellt:
- Figur 1: zeigt einen schematischen Teil-Querschnitt senkrecht zur Achse einer erfindungsgemäßen Kupplung.
- Figur 2: zeigt einen achsparellelen Schnitt durch die Kupplung gemäß Figur 1 entlang der Linie II-II.
- Figur 3: zeigt einen achsparallelen Schnitt durch die Kupplung gemäß Figur 1 entlang der Linie III-III.
- Figur 4: zeigt die mit der Erfindung erzielbare Federcharakteristik.

Bei dem dargestellten Ausführungsbeispiel wurde eine Kupplung dargestellt, bei der gegenüber üblichen Torsionsschwingungsdämpfer ein schwimmender Dämpfungsring vorgesehen ist, der im Innenraum zwischen den beiden Seitenscheiben zusätzlich eingefügt ist und der gegenüber den beiden Kupplungshälften jeweils begrenzt verdrehbar ist. Hierauf soll noch im einzelnen eingegangen werden.

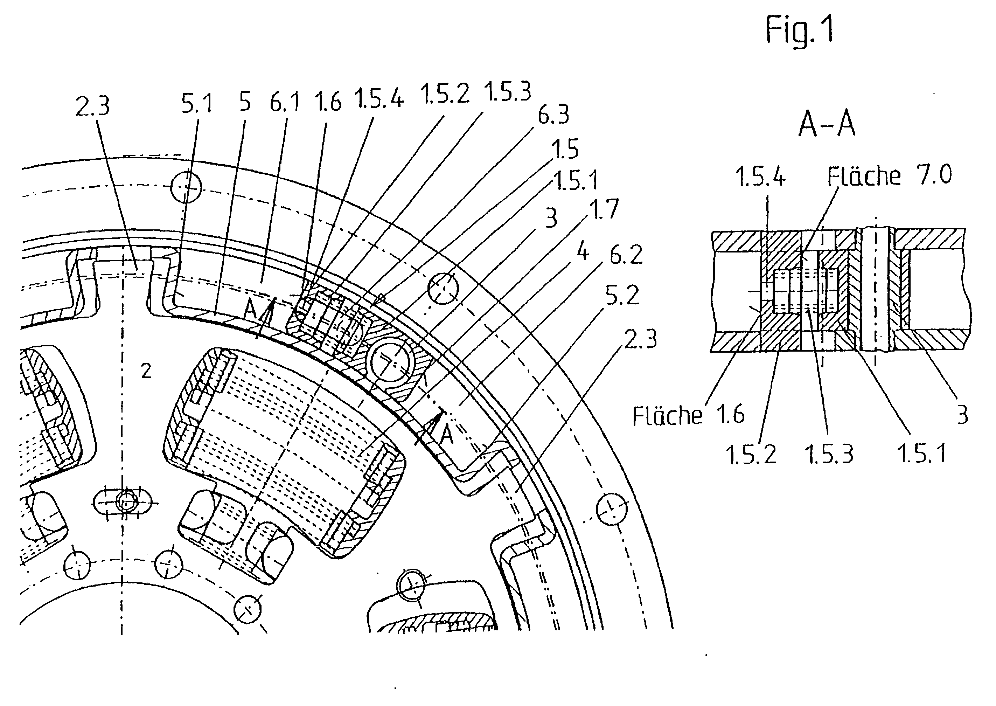

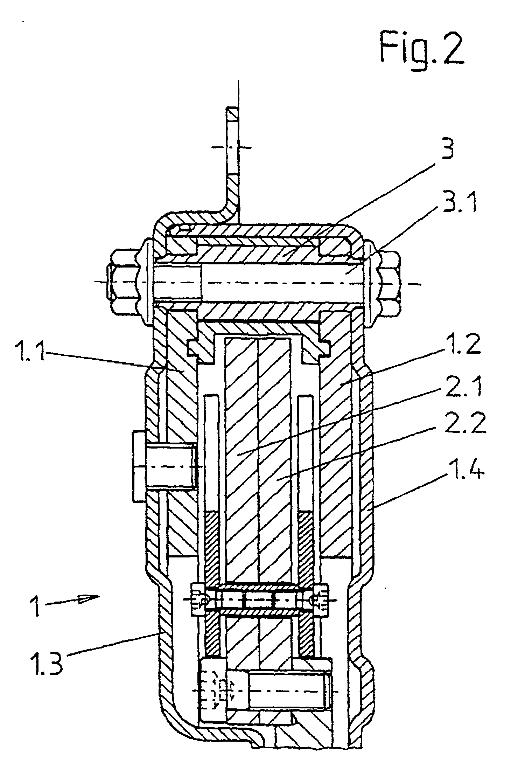

Im einzelnen erkennt man aus den Figuren 1-3 die folgenden Bauteile:

Die Primärhälfte 1 der Kupplung umfaßt zwei Seitenscheiben 1.1 und 1.2, femer zwei Gehäuseteile 1.3, 1.4, die die genannten Seitenscheiben umschließen.

Zwischen den beiden Seitenscheiben 1.1, 1.2 ist eine Mittelscheibe 2 vorgesehen. Diese bildet den wesentlichen Teil der Sekundärhälfte der Kupplung. Sie ist im vorliegenden Falle aus zwei Einzelscheiben 2.1 und 2.2 zusammengefügt. Die Mittelscheibe 2 weist an ihrem Außenumfang eine Mehrzahl von Nocken 2.3 auf.

Man erkennt femer eine Distanz- und Zentrierbuchse 3. Diese ist in achsparalleler Richtung im Umfangsbereich durch die gesamte Einheit hindurchgeführt und mittels einer Schraube 3.1 fixiert. Es versteht sich, daß über den Umfang der gesamten Kupplung hinweg eine Mehrzahl solcher Distanz- und Zentrierbuchsen sowie zugehörende Schrauben vorgesehen sind.

Insbesondere aus Figur 1 ist ferner ein Federpaket 4 erkennbar. Es sind mehrere solcher Federpakete über den Umfang der Kupplung verteilt angeordnet.

Die Distanz- und Zentrierbuchse 3 trägt einen Nocken 1.5, der Bestandteil der ersten Kupplungshälfte 1 ist. Nocken 1.5 umfaßt einen feststehenden Teil 1.5.1 sowie einen im Umfangsrichtung beweglichen Teil 1.5.2. Zwischen den beiden Nockenteilen 1.5.1 und 1.5.2 befindet sich eine Zusatzfeder 1.5.3. Diese hat das Bestreben, die beiden Nockenteile auseinanderzudrücken. Diese Zusatzfeder bringt eine zusätzliche Kraft im Endbereich der gegenseitigen Verdrehung der beiden Kupplungshälften 1, 2 auf. Hierauf soll später noch eingegangen noch werden.

Man erkennt weiterhin den genannten schwimmenden Dämpfungsring 5. Dieser ist axial im Zwischenraum zwischen den beiden Seitenscheiben 1.1, 1.2 angeordnet. In radialer Richtung befindet er sich radial außerhalb der Innenscheibe 2. Wie aus Figur 1 erkennbar, weist er durch entsprechend abgekröpfte Teile Anschlagflächen 5.1 und 5.2 auf.

Nocken 1.5 ist ebenfalls mit Anschlagflächen versehen. Man erkennt die Anschlagfläche 1.6 des beweglichen Nockenteiles sowie die Anschlagfläche 1.7 des feststehenden Nockenteiles.

Zwischen den beiden Anschlagflächen 5.1 und 1.6 ist eine Teil-Verdrängungskammer (Teilkammer) 6.1 begrenzt und zwischen den Anschlagflächen 1.7 und 5.2 eine Teil-Verdrängungskammer (Teilkammer) 6.2.

Beim Betrieb der Kupplung findet in bekannter Weise eine begrenzte relative Verdrehung der beiden Kupplungshälften 1 und 2 statt. Diese hat zur Folge, daß die Teilkammern 6.1 und 6.2 zyklisch vergrößert und verkleinert werden, und zwar auf die folgende Weise: Nimmt das Volumen von Teilkammer 6.1 ab, so nimmt dasjenige von Teilkammer 6.2 im selben Maße zu. Die beteiligten Anschlagflächen 1.6, 5.1 einerseits und 1.7, 5.2 andererseits nähern sich hierbei einander an bzw. entfernen sich voneinander. Bei dieser Relativbewegung ist eine Kraft zu überwinden.

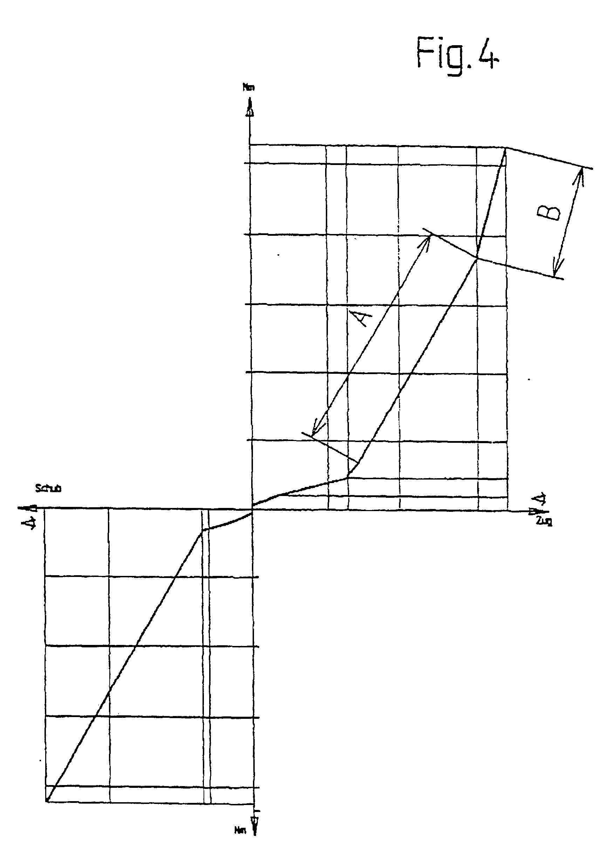

Aufgrund der besonderen Gestaltung von Nocken 1.5 nimmt die Kraft auf dem letzten Abschnitt des Weges zu. Das Kraft-Weg-Diagramm ist aus Figur 4 erkennbar. Abschnitt A ist jener Abschnitt, bei dem die Federkennlinie einen relativ flachen Verlauf hat. Abschnitt B ist jener Abschnitt, bei dem die Federkennlinie aufgrund der Erfindung einen relativ steilen Verlauf hat. Dieser steile Verlauf geht auf die Wirkung der genannten Zusatzfeder 1.5.3 zurück. Im Endbereich der relativen Verdrehung zwischen den beiden Kupplungshälften 1, 2, bevor die beiden Anschlagflächen 1.6 und 5.1 zum gegenseitigen Anliegen kommen, wird die Zusatzfeder 1.5.3 komprimiert.

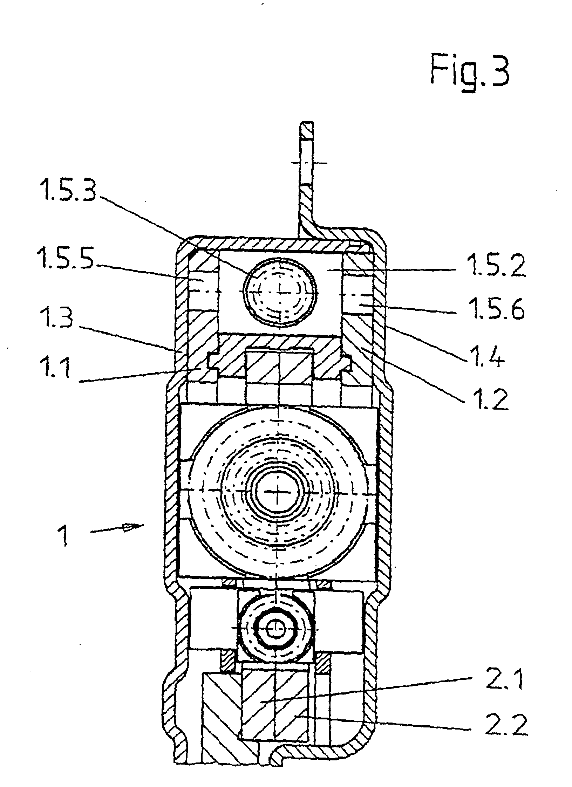

Des weiteren können die beiden Nockenteile derart ausgeführt werden, daß die Dämpfung in diesem Bereich erhöht wird. Dies wird dadurch erreicht, daß die Dämpfungsspalte von Nocken 1.5 enger gemacht werden als diejenigen des schwimmenden Dämpfungsringes 5. Zusätzlich erhöht sich der Querschnitt der Dämpfungskammer 6.3, so daß sich das Dämpfungsvolumen vergrößert, was wiederum die Dämpfung erhöht. Man erkennt in Figur 1 eine Bohrung 1.5.4 im beweglichen Nockenteil 1.5.2. Ferner erkennt man aus Figur 3 die Gestalt des beweglichen Nockenteiles 1.5.2 in der Draufsicht. Wie man sieht, weist das bewegliche Nockenteil 1.5.2 zu seinen beiden Seiten je einen Führungszapfen 1.5.5, 1.5.6 auf. Zusammen mit diesen Führungszapfen ist diese in Fig. 1, Schnitt A-A zu sehende Fläche des beweglichen Nockenteiles 1.5.2 größer als dessen Anschlagfläche 1.6. Die beiden Führungszapfen 1.5.5, 1.5.6 sind in Langlöchern geführt, die in die beiden Seitenscheiben 1.1., 1.2 eingearbeitet sind und die sich in Umfangsrichtung erstrecken. Dabei sollten die genannten Führungszapfen in diesen Langlöchem dichtend geführt werden.

Das bewegliche Nockenteil 1.5.2 ist von viskosem Dämpfungsmittel umgeben, das überall unter demselben Druck steht. Aufgrund der genannten Unterschiede der beteiligten Flächen kommt es jedoch bei einer gegenseitigen Annäherung der Anschlagflächen 1.6 und 5.1 zum Wirken einer hydrodynamischen Kraft, die das Bestreben hat, die beiden Nockenteile 1.5.1 und 1.5.2 auseinanderzudrücken, genauso wie die Kraft der Feder 1.5.3.

Die Erfindung läßt sich ungeachtet der Scheibenanzahl verwenden.

Sie ist auch nicht abhängig von der Verwendung des schwimmenden Dämpfungsrings 5.

## Patentansprüche

1. Elastische Kupplung in Scheibenbauweise, insbesondere ein Zweimassenschwungrad für eine Brennkraftmaschine, mit den folgenden Merkmalen:
eine erste Kupplungshälfte (1) umfaßt zwei am Außenumfang drehfest verbundene Seitenscheiben (1.1, 1.2);
eine zweite Kupplungshälfte (2) ist durch mindestens eine einer Nabe zugeordnete Scheibe (Mittelscheibe 2) gebildet, die zwischen den Seitenscheiben (1.1, 1.2) von diesen umhüllt angeordnet ist;
beide Kupplungshälften (1, 2) sind begrenzt gegeneinander verdrehbar und über elastische Kupplungselemente (4) miteinander verbunden;
die Seitenscheiben (1.1, 1.2) begrenzen einen die Mittelscheibe (2) aufnehmenden, flüssigkeitsdichten Innenraum;
im radial äußeren Bereich des Innenraumes befindet sich wenigstens eine mit Dämpfungsmedium füllbare und eine Drosselöffnung aufweisende Verdrängungskammer;
die Verdrängungskammer ist in Umfangsrichtung begrenzt durch zwei erste Nocken (2.3, 2.3), die der einen Kupplungshälfte zugeordnet sind, sowie durch einen zweiten Nocken (1.5), der der anderen Kupplungshälfte zugeordnet ist;
der zweite Nocken (1.5) unterteilt die Verdrängungskammer in zwei Teilkammern (6.1, 6.2), deren Volumina sich beim gegenseitigen Verdrehen der Kupplungshälften abwechselnd derart verändern, daß sich das Volumen der einen Teilkammer vergrößert, während sich das Volumen der anderen Teilkammer verkleinert;
wenigstens einer (1.5) der Nocken ist in ein feststehendes Nockenteil (1.5.1) und ein in Umfangsrichtung verschiebbares, die betreffende Teilkammer (6.1) begrenzendes Teil (1.5.2) unterteilt;
das in Umfangsrichtung verschiebbare Nockenteil (1.5.2) ist entgegen der Kraft einer Feder (1.5.3) verschiebbar,
zwischen den beiden Nockenteilen (1.5.1) und (1.5.2) ist eine dritte Dämpfungskammer (6.3) gebildet.

2. Kupplung nach Anspruch 1, **dadurch gekennzeichnet, daß** die Feder eine Druckfeder (1.5.3) ist.

3. Kupplung nach Anspruch 1 oder 2, **dadurch gekennzeichnet, daß** das verschiebbare Nockenteil (1.5.2) als Federtopf ausgebildet ist.

## Claims

1. Flexible clutch in a disc design, in particular a two-mass flywheel for an internal-combustion engine, comprising the following features:
a first clutch half (1) comprises two side discs (1.1, 1.2) non-rotationally connected to the external periphery;
a second clutch half (2) is formed by at least one disc (central disc 2) associated with a hub, the disc being arranged between the side discs (1.1, 1.2) and sheathed thereby;
the two clutch halves (1, 2) can be rotated relative to one another to a limited extent and are connected to one another via flexible clutch elements (4);
the side discs (1.1, 1.2) delimit an inner space which is impermeable to liquid and receives the central disc (2);
at least one displacement chamber which can be filled with damping medium and having a throttle aperture is located in the radially outer region of the inner space;
the displacement chamber is delimited in the peripheral direction by two first cams (2.3, 2.3) associated with the one clutch half, as well as by a second cam (1.5) which is associated with the other clutch half;
the second cam (1.5) divides the displacement chamber into two partial chambers (6.1, 6.2), the volumes of which change in an alternating manner in the event of mutual rotation of the clutch halves in such a way that the volume of the one partial chamber increases while the volume of the other partial chamber decreases;
at least one (1.5) of the cams is divided into a fixed cam part (1.5.1) and a part (1.5.2) which can be displaced in the peripheral direction and delimits the relevant partial chamber (6.1) ;
the cam part (1.5.2) which can be di splaced in the peripheral direction is displaceable counter to the force of a spring (1.5.3),
a third damping chamber (6.3) is formed between the two cam parts (1.5.1) and (1.5.2).

2. Clutch according to claim 1, **characterised in that** the spring is a compression spring (1.5.3).

3. Clutch according to claim 1 or 2, **characterised in that** the displaceable cam part (1.5.2) is designed as a spring cup.

## Revendications

1. Accouplement élastique dans un élément à disques, en particulier une roue de volant à deux mesures pour un moteur à combustion interne, ayant les caractéristiques suivantes :
une première moitié d'accouplement (1) comprend deux disques latéraux (1.1, 1.2) solidaires en rotation sur la circonférence extérieure ;
une deuxième moitié d'accouplement (2) est formée par au moins un disque (disque central 2) associé à un moyeu, lequel disque est disposé entre les disques latéraux (1.1, 1.2) et recouvert par ceux-ci ;
les deux moitiés d'accouplement (1, 2) sont limitées en mobilité l'une contre l'autre et reliées entre elles par des éléments d'accouplement (4) élastiques ;
les disques latéraux (1.1, 1.2) délimitent un compartiment interne étanche aux fluides qui reçoit le disque central (2) ;
dans la zone radiale externe du compartiment interne, se trouve au moins une chambre de déplacement pouvant être remplie d'un fluide amortisseur et présentant un orifice de laminage ;
la chambre de déplacement est limitée dans la direction de la circonférence par deux premières cames (2.3, 2.3) qui sont associées à une moitié d'accouplement, et par une deuxième came (1.5) qui est associée à l'autre moitié d'accouplement ;
la deuxième came (1.5) sépare la chambre de déplacement en deux chambres partielles (6.1, 6.2) dont les volumes se modifient lors de la rotation mutuelle des moitiés d'accouplement de telle sorte que le volume de l'une des chambres partielles augmente pendant que le volume de l'autre chambre partielle diminue ;
au moins une (1.5) des cames est séparée entre une partie de came immobile (1.5.1) et une partie (1.5.2) limitant la chambre partielle respective (6.1) mobile dans la direction de la circonférence ;
la partie de came (1.5.2) mobile dans la direction de la circonférence est mobile sous la force d'un ressort (1.5.3.) ;
entre les deux parties de came (1.5.1) et (1.5.2), une troisième chambre d'amortissement (6.3) est formée.

2. Accouplement selon la revendication 1, **caractérisé en ce que** le ressort est un ressort de compression (1.5.3.).

3. Accouplement selon la revendication 1 ou 2, **caractérisé en ce que** la partie de came (1.5.2) mobile est configurée comme un pot élastique.
